# EUROPÄISCHE PATENTSCHRIFT

(11) **EP 1 311 781 B1**
(45) Veröffentlichungstag und Bekanntmachung des Hinweises auf die Patenterteilung: **24.01.2007**
(21) Anmeldenummer: 01959954.7
(22) Anmeldetag: 21.08.2001
(51) Int. Cl.: F16K 17/30

(54) **HYDRAULIKVENTIL**
HYDRAULIC VALVE
SOUPAPE HYDRAULIQUE

(30) Priorität: 23.08.2000 AT 14522000; 15.06.2001 AT 9312001
(43) Veröffentlichungstag der Anmeldung: 21.05.2003
(73) Patentinhaber: WEBER, Gisela, A-2474 Gattendorf (AT)
(72) Erfinder: WEBER, Gisela, A-2474 Gattendorf (AT)
(74) Vertreter: Schneider Feldmann AG Patent- und Markenanwälte
(86) Internationale Anmeldenummer: PCT/AT2001/000270
(87) Internationale Veröffentlichungsnummer: WO 2002/016813

(56) Entgegenhaltungen:
- DE-C- 855 186
- FR-A- 1 257 824
- GB-A- 556 863
- US-A- 2 204 757
- US-A- 3 749 122

## Beschreibung

Die Erfindung betrifft ein Rohrbruchventil mit einem Gehäuse, das einen im wesentlichen zylindrischen Gehäuseinnenraum aufweist, der durch einen Ventilteller verschließbar ist, welcher von einem zentralen Schaft getragen und von einer diesen umgebenden Ventilfeder in die Offenstellung vorgespannt ist, und mit einem im Gehäuseinnenraum angeordneten Einsatzkörper, der auf einem Kreis nebeneinander angeordnete Durchgänge aufweist, wobei der zentrale Schaft den Einsatzkörper durchsetzt und mit einem Einstellkopf versehen ist.

Aus der GB-556 863 ist ein Ventil dieser Art bekannt, das einen relativ komplizierten Innenaufbau hat, weil der Ventilschaft mehrteilig ausgebildet ist und die Teile von beiden Stirnseiten des Ventilgehäuses her eingebaut und miteinander verbunden werden müssen. Außerdem dichtet der Ventilteller gegen einen Konus des Gehäuseinnenraumes flächig ab, was die Gefahr einer unvollständigen Abdichtung mit sich bringt. Schließlich muß bei dem bekannten Ventil der Gehäuseinnenraum von zwei Seiten her bearbeitet werden, um den Konus und einen Absatz des Gehäuseinnenraumes zur Aufnahme des Einsatzkörpers auszubilden, was zeit- und kostenaufwendig ist.

Die Erfindung zielt darauf ab, diese Nachteile zu beheben, und erreicht dies bei einem Ventil der einleitend angegebenen Art dadurch, daß der Ventilteller mit seinem kegelförmigen Verschlussrand an der stirnseitigen Kante des Gehäuseinnenraumes angreift, daß der Einsatzkörper in einem Absatz des Gehäuseinnenraumes angeordnet und als im Querschnitt zahnradförmiger Körper mit kreisförmigen Zahnlücken ausgebildet ist, welche mit der Gehäuseinnenwand die Durchgänge bilden, wobei der den Einsatzkörper durchsetzende zentrale Schaft einstückig ausgebildet und mit einer einstellbaren Sicherungsmutter versehen ist, und daß das dem Ventilteller abgekehrte Ende des Gehäuses mit einem Gewinde und einem konus des Gehäuseinnenraums der Ventilbohrung versehen ist, in welchen ein konischer Schneidring eingreifen kann, der ein Rohr umgibt und von einer auf das Gewinde aufgeschraubten Mutter in Eingriff mit dem konus des Gehäuseinnenraums gehalten werden kann.

Vorzugsweise ist der Einsatzkörper im Absatz des Gehäuseinnenraumes mit axialem Spiel zu einem Sprengring angeordnet.

Gegenstand der Erfindung ist ferner ein alternatives Hydraulikventil der einleitend angegebenen Art, welches sich dadurch auszeichnet, daß Ventiltellerschaft an der Aussenseite des Ventiltellers mit einer einstellbaren Sicherungsmutter versehen ist.

Durch die erfindungsgemäße, insgesamt aus wenigen Teilen bestehende einfache Konstruktion wird eine Bearbeitung des Gehäuses nur von einer Stirnseite her notwendig, weil die Ventildurchgänge in einem gesonderten Einsatzkörper ausgeführt sind und je nach den Bedürfnissen entsprechend unterschiedliche Einsatzkörper mit verschieden großen Durchgängen eingesetzt werden können. Ein besonderen Vorteil der erfindungsgemäßen Konstruktion besteht ferner, wenn der Einsatzkörper axiales Spiel hat, darin, daß der Einsatzkörper unter dem Druck der von der Pumpe zuströmenden Flüssigkeit zu dem Sprengring hin in eine Anschlagstellung bewegt wird, in welcher der Ventildurchflußquerschnitt vergrößert wird.

Eine weiterere erfindungsgemässe Ausführungsform eines Rohrbruchventils wird erreicht indem der den Einsatzkörper durchsetzende zentrale Schaft einstückig ausgebildet und an der Innenseite des Einsatzkörpers mit einer einstellbaren Sicherungsmutter versehen ist, und der Einsatzkörper mit der Gehäuseinnenwand und mit dem zentralen Schaft formschlüssig in Eingriff steht.

Die Erfindung wird nachfolgend an Ausführungsbeispielen unter Bezugnahme auf die Zeichnung näher erläutert. Es zeigen:

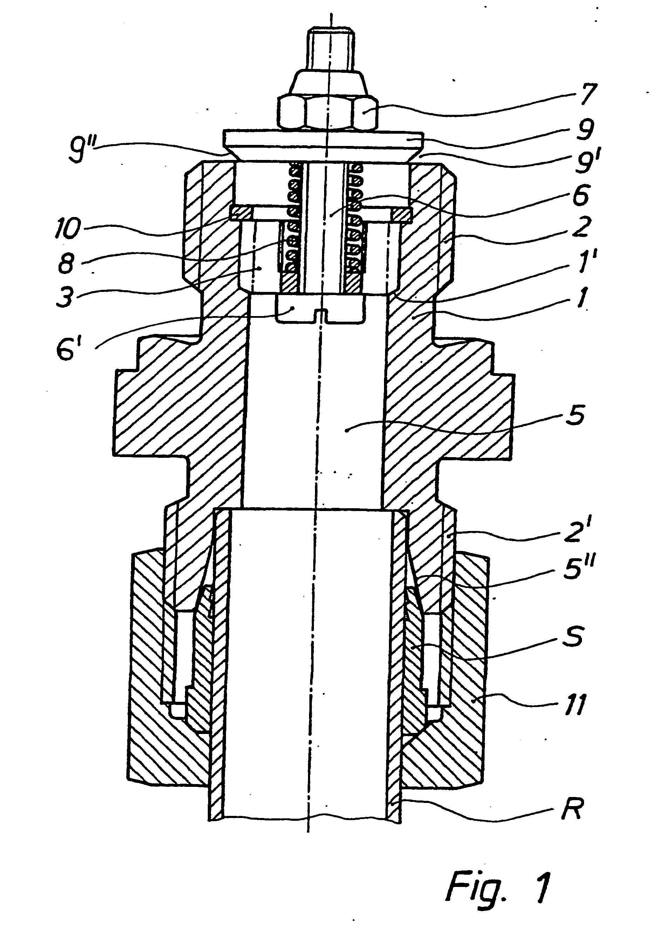

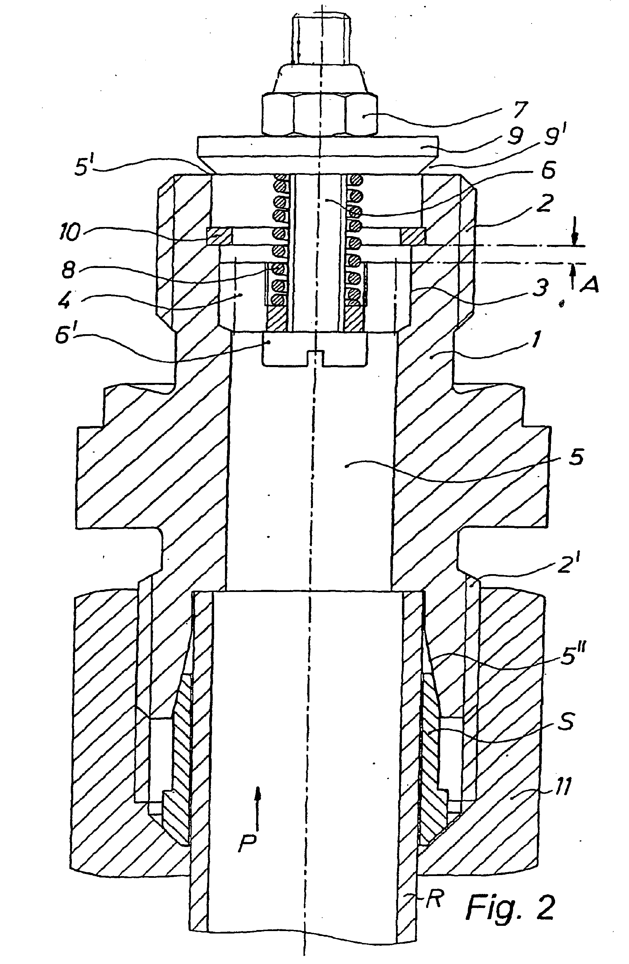

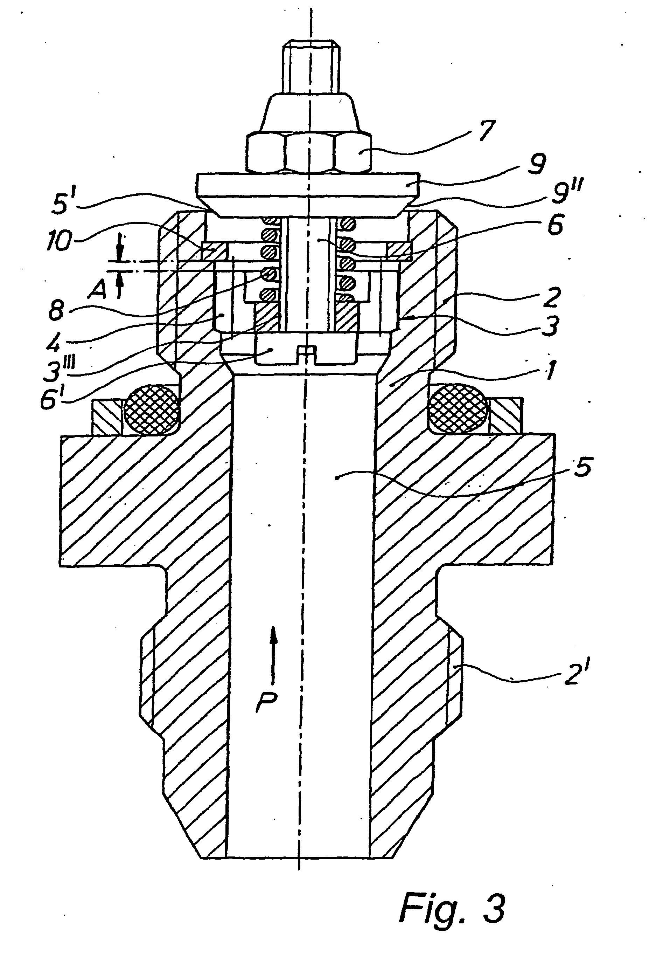

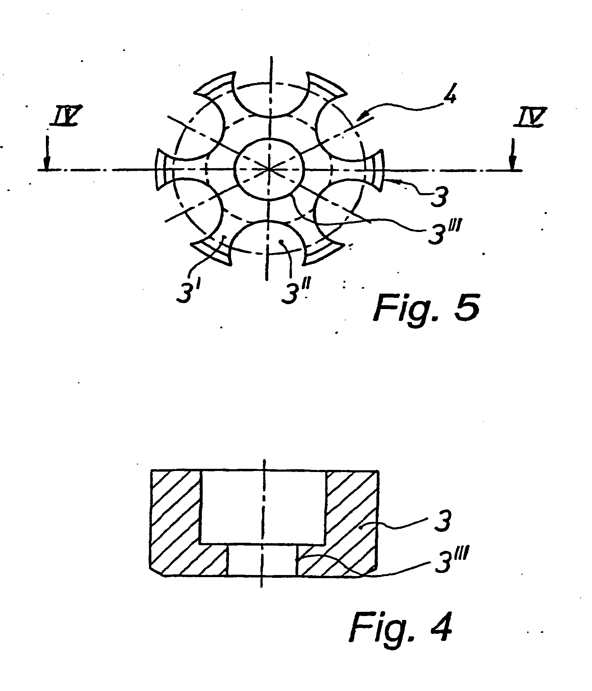

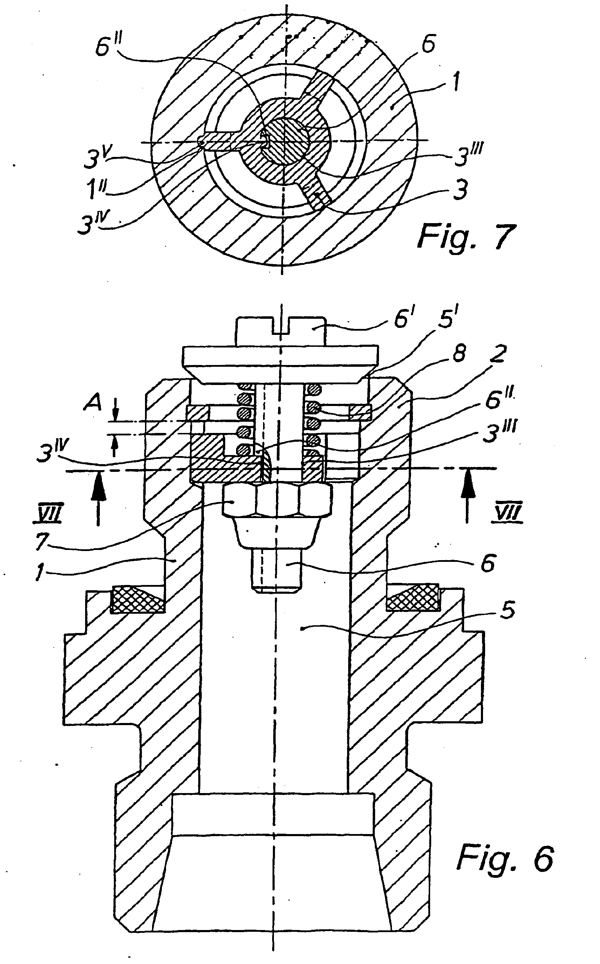

Fig. 1 einen Axialschnitt durch ein erfindungsgemäßes Ventil, einseitig montiert an einem Rohr, Fig.2 eine alternative Ausführungsform, einseitig montiert an einem Rohr, Fig. 3 eine Alternativausführung, Fig. 4 eine Seitenansicht des Einsatzkörpers nach der Linie IV-IV der Fig. 5, Fig. 5 eine Draufsicht des Einsatzkörpers, Fig. 6 einen Axialschnitt einer dritten Ausführungsform, und Fig. 7 einen Schnitt nach der Linie VII-VII in Fig. 6.

Das in Fig. 1 dargestellte Rohrbruchventil hat ein zylindrisches Einschraub-Ventilgehäuse 1 mit einem Außengewindeabschnitt 2 an dem einen und einem Außengewindeabschnitt 2' an dem anderen Ende. In einem im Gehäuseinnenraum 5 angeordneten Einsatzkörper 3 sind auf einem Kreis nebeneinander Durchgänge 4 für das Hydraulikmedium ausgebildet. Der Einsatzkörper 3 wird von einem zentralen Schaft 6 mit Schraubgewinde durchsetzt, der einen Ventilteller 9 trägt und an der dem Ventilteller 9 abgekehrten Stirnseite des Einsatzkörpers 3 mit einem Einstell-Schraubenkopf 6' angreift sowie am Ventilteller 9 mittels einer Sicherungsmutter 7 einstellbar festgelegt ist. Der zentrale Schaft 6 bzw. der Einsatzkörper 3 trägt eine Ventilfeder 8, die am Ventilteller 9 endet, welcher im Ruhezustand von der Oberseite des Gehäuses 1 einen vorbestimmten Abstand hat und einen kegelförmigen Verschlußrand 9' aufweist, der bei einem Rohrleitungsbruch auf der Zuströmseite (Pfeil P) an der stirnseitigen Kante 5' des Gehäuseinnenraumes 5 unter dem der Ventilfeder 8 entgegenwirkenden Mediumdruck, z.B. aus einem nicht gezeigten Hydraulik-Hubzylinder, abdichtend angreift.

Mittels eines Sprengringes 10 ist in einem Absatz des Gehäuseinnenraumes 5 ein Einsatzkörper 3 festgelegt. Der Ventileinsatzkörper 3 hat gemäß der Fig. 4 und 5 im wesentlichen zylindrische und im Querschnitt zahnradförmige Gestalt mit Zähnen 3' und Zahnlücken 3", die kreisförmige Kontur haben und mit der Gehäuseinnenwand die Ventildurchgänge 4 bilden.

Gemäß Fig. 2 hat der Einsatzkörper 3 gegenüber dem Sprengring 10 ein vorbestimmtes Axialspiel A, so daß er unter dem Strömungsdruck in Richtung des Pfeiles P (von der Pumpe) in der Anschlagstellung am Sprengring 10 anliegt, wodurch der Durchflussquerschnitt zwischen dem Kegelformigen Verschlussrand Ventiltellerrand 9' und der Kante 5' vergrößert wird.

Bei den in den Fig. 1 und 2 dargestellten Ausführungsformet kann an dem unteren Ende des Ventilkörpers 1 ein Rohr R eingesetzt werden, das an seiner Außenseite von einem konischen Schneidring S umgeben ist, der in einen Innenkonus 5' des Gehäuseinnenraums 5 eingreift. Das Rohr R und der Schneidring S können mit Hilfe einer Mutter 11 an dem Gewinde 2' des Ventilkörpers 1 festgeschraubt werden. Diese Konstruktion verhindert, daß Lecköl aus dem Ventil z.B. über das Gewinde 2' austritt, was der Fall wäre, wenn das Gehäuse über das Gewinde 2', wie üblich, in eine Bohrung eingeschraubt würde.

Fig. 3 zeigt eine Ausführungsform des erfindungsgemäßen Ventiles ohne angesetztes Rohr, jedoch mit einem mit Axialspiel angeordneten Einsatzkörper 3.

Die Fig. 6 und 7 zeigen eine weitere Ausführungsform der Erfindung, bei welcher der den Einsatzkörper 3 durchsetzende zentrale Schaft 6 an der Innenseite des Einsatzkörpers mit der Sicherungsmutter 7 versehen ist. Die zentrale Bohrung 3''' des Einsatzkörpers 3 ist mit einer axialen Rippe 3^{IV} versehen, welche in eine axiale Nut 6" des zentralen Schaftes 6 eingreift. An seinem Umfang hat der Einsatzkörper 3 ferner eine axiale Rippe 3^{V}, die mit einer axialen Nut 1" des Gehäuses in Eingriff steht. Auf diese Weise ist der Einsatzkörper 3 formschlüssig drehfest gehalten und es kann eine Einstellung des Ventils ohne Demontage vorgenommen werden.

### Liste der Bezeichnungen

- 1: Gehäuse
- 1': Absatz im Gehäuseinnenraum
- 1": axialen Nut der Gehäuseinnenwand
- 2, 2': Gewinde
- 3: Einsatzkörper
- 3": Kreisförmige Zahnlücke
- 4: Durchgänge (Ventildurchgänge)
- 5: Gehäuseinnenraum
- 5': Kante des Gehäuseinnenraums
- 5": Konus des Gehäuseinnenraums
- 6: Zentraler Schaft
- 6': Einstellkopf
- 6": Axiale Nut
- 7: Sicherheitsmutter
- 8: Ventilfeder
- 9: Ventilteller
- 9': Abstand des Ventiltellers
- 9": Kegelförmiger Verschlussrand
- 10: Sprengring
- 11: Mutter
- A: Axialspiel
- P: Zuströmseite
- R: Rohr
- S: Schneidring

## Patentansprüche

1. Rohrbruchventil mit einem Gehäuse (1), das einen im wesentlichen zylindrischen Gehäuseinnenraum (5) aufweist, der durch einen Ventilteller (9) verschliessbar ist, welcher von einem zentralen Schaft (6) getragen und von einer diesen umgebenden Ventilfeder (8) in die Offenstellung vorgespannt ist, und mit einem im Gehäuseinnenraum (5) angeordneten zylindrischen Einsatzkörper (3), der auf einem Kreis nebeneinander angeordneten Durchgänge (4) aufweist, wobei der zentrale Schaft (6) den Einsatzkörper (3) durchsetzt und mit einem Einstellkopf (6') versehen ist, **dadurch gekennzeichnet, dass** der Ventilteller (9) mit seinem kegelförmigen Verschlussrand (9") an der stirnseitigen Kante des Gehäuseinnenraumes (5) angreift, dass der Einsatzkörper (3) in einem Absatz des Gehäuseinnenraumes (1') angeordnet und als im Querschnitt zahnradförmiger Körper mit kreisförmigen Zahnlücken (3") ausgebildet ist, welche mit der Gehäuseinnenwand die Durchgänge (4) bilden, wobei der den Einsatzkörper (3) durchsetzende zentrale Schaft (6) einstückig ausgebildet und mit einer einstellbaren Sicherungsmutter (7) versehen ist, und dass das dem Ventilteller (9) abgekehrte Ende des Gehäuses (1) mit einem Gewinde (2') und einem Konus des Gehäuseinnenraums (5") der Ventilbohrung (5) versehen ist, in welchen ein konischer Schneidring (S) eingreifen kann, der ein Rohr (R) umgibt und von einer auf das Gewinde (2') aufgeschraubten Mutter (11) in Eingriff mit dem Konus des Gehäuseinnenraums (5") gehalten werden kann.

2. Rohrbruchventil gemäss Anspruch 1, **dadurch gekennzeichnet, dass** das Gehäuse (1) einstückig ausgebildet ist.

3. Rohrbruchventil gemäss einem der Ansprüche 1 oder 2, **dadurch gekennzeichnet, dass** der zentrale Schaft (6) den Ventilteller (9) durchstösst.

4. Rohrbruchventil gemäss einem der Ansprüche 1 bis 3, **dadurch gekennzeichnet, dass** der zentrale Schaft (6) an der Aussenseite des Ventiltellers (9) mittels einer Sicherungsmutter (7) einstellbar festgelegt ist.

5. Rohrbruchventil gemäss einem der Ansprüche 1 bis 3, **dadurch gekennzeichnet, dass** der zentrale Schaft (6) an der Innenseite des Einsatzkörpers mittels einer Sicherungsmutter (7) versehen ist.

6. Rohrbruchventil gemäss Anspruch 5, **dadurch gekennzeichnet, dass** der Einsatzkörper (3) formschlüssig drehfest im Gehäuse (1) gehalten wird.

7. Rohrbruchventil gemäss Anspruch 5 oder 6, **dadurch gekennzeichnet, dass** die zentrale Bohrung (3^{III}) des Einsatzkörpers (3) sowohl mit einer axialen Rippe (3^{IV}) versehen ist, welche in eine axiale Nut des zentralen Schafts (6) eingreift, als auch an seinem Umfang eine axiale Rippe (3^{v}) aufweist, welche mit einer axialen Nut (1") der Wand des Gehäuseinnenraums (5) im Eingriff steht.

8. Rohrbruchventil gemäss einem der vorhergehenden Ansprüche, **dadurch gekennzeichnet, dass** die Ventilfeder (8) am Ventilteller (9) endet.

9. Rohrbruchventil gemäss einem der vorhergehenden Ansprüche, **dadurch gekennzeichnet, dass** ein Sprengring (10) in einem Absatz des Gehäuseinnenraums (5) den Einsatzkörper (3) festhält.

10. Rohrbruchventil nach Anspruch 9, **dadurch gekennzeichnet, dass** der Einsatzkörper (3) im Absatz des Gehäuseinnenraumes (1') mit Axialspiel (A) zum Sprengring (10) angeordnet ist.

## Claims

1. A hose burst valve with a housing (1) essentially having a cylindrical housing interior space (5) which can be locked by means of a valve disk (9) which is supported by a central shaft (6) and prestressed by means of a valve spring (8) surrounding said shaft into an open position, and with a cylindrical inserted body (3) arranged within the housing interior space (5) and having passages (4) arranged parallel to each other on a circle wherein the central shaft (6) passes through the inserted body (3) and is provided with an adjusting knob (6') **characterized in that** the valve disk (9) with its conical sealing edge (9") engages with the end face edge of the housing interior space (5), **in that** the inserted body (3) is placed in a housing interior space recess (1') and is formed as a body having a cross-section in the form of a toothed wheel with circular tooth spaces (3'') forming the passages (4) with the housing interior wall wherein the central shaft (6) passing through the inserted body (3) is formed integrally and is provided with an adjustable locknut (7), and **in that** the end of the housing (1) opposite to the valve disk (9) is provided with a thread (2') and a housing interior space cone (5'') of the valve bore (5) wherein a conical cutting ring (S) surrounding a pipe (R) is able to engage therewith and can be kept in engagement with the housing interior space cone (5'') by means of a nut (11) threaded onto the thread (2').

2. A hose burst valve according to claim 1 **characterized in that** the housing (1) is formed in an integral manner.

3. A hose burst valve according to any of the claims 1 or 2 **characterized in that** the central shaft (6) penetrates through the valve disk (9).

4. A hose burst valve according to any of the claims 1 to 3 **characterized in that** the central shaft (6) is adjustably attached to the outer face of the valve disk (9) by means of a locknut (7).

5. A hose burst valve according to any of the claims 1 to 3 **characterized in that** the central shaft (6) is provided with a locknut (7) at the inner face of the inserted body.

6. A hose burst valve according to claim 5 **characterized in that** the inserted body is kept in the housing (1) in a positive locking and unrotatable manner.

7. A hose burst valve according to claim 5 or 6 **characterized in that** the central bore (3^{III}) of the inserted body (3) is provided both with an axial rib (3^{IV}) engaging with an axial groove of the central shaft (6) and has, at its circumference, an axial rib (3^{v}) engaging with an axial groove (I^{II}) of the wall of the housing interior space (5).

8. A hose burst valve according to any of the preceding claims **characterized in that** the valve spring (8) ends at the valve disk (9).

9. A hose burst valve according to any of the preceding claims **characterized in that** a retainer ring (10) arranged in a recess of the housing interior space (5) retains the inserted body (3).

10. A hose burst valve according to claim 9 **characterized in that** the inserted body (3) is arranged in the housing interior space recess (1') with an axial play (A) with respect to the retainer ring (10).

## Revendications

1. Un clapet d'arrêt automatique avec un boîtier (1) comportant un intérieur de boîtier (5) essentiellement cylindrique pouvant être fermé par une tête de soupape (9) portée par une tige centrale (6) et précontrainte dans une position ouverte par un ressort de soupape (8) entourant ladite tige, et avec un corps d'insertion (3) cylindrique disposé dans l'intérieur de boîtier (5) comportant des passages (4) arrangés côte à côte sur un cercle, ladite tige centrale (6) passant au travers du corps d'insertion (3) et étant pourvue d'un bouton de réglage (6'), **caractérisé en ce que** la tête de soupape (9) avec sa bordure de fermeture (9'') conique contacte l'arête du côté frontal de l'intérieur de boîtier (5), **en ce que** le corps d'insertion (3) est disposé dans un épaulement de l'intérieur de boîtier (1') et est formé comme un corps avec une section transversale en forme de roue dentée avec des entredents (3'') circulaires formant avec la paroi interne du boîtier lesdites passages (4), ladite tige centrale (6) passant au travers du corps d'insertion (3) étant formée de manière intégrale et munie d'un contre-écrou (7) ajustable, et **en ce que** l'extrémité du boîtier (1) vis-à-vis de la tête de soupape (9) est munie d'un filetage (2') et d'un cône de l'intérieur de boîtier (5'') de l'alésage de soupape (5) dans lequel peut s'engrener une bague coupante (S) conique qui entoure un tuyau (R) et qui peut être tenu en engrènement avec le cône de l'intérieur de boîtier (5'') par un écrou (11) vissé au filetage (2').

2. Un clapet d'arrêt automatique selon la revendication 1 **caractérisé en ce que** le boîtier (1) est formée de manière intégrale.

3. Un clapet d'arrêt automatique selon l'une des revendications 1 ou 2, **caractérisé en ce que** la tige centrale (6) pénètre dans la tête de soupape (9).

4. Un clapet d'arrêt automatique selon l'une des revendications 1 à 3, **caractérisé en ce que** la tige centrale (6) est fixée à la face extérieure de la tête de soupape (9) de manière ajustable au moyen d'un contre-écrou (7).

5. Un clapet d'arrêt automatique selon l'une des revendications 1 à 3, **caractérisé en ce que** la tige centrale (6) est munie d'un contre-écrou (7) à la face intérieure du corps d'insertion (3).

6. Un clapet d'arrêt automatique selon la revendication 5 **caractérisé en ce que** le corps d'insertion (3) est tenu dans le boîtier (1) en engrènement positif et résistant à la rotation.

7. Un clapet d'arrêt automatique selon la revendication 5 ou 6, **caractérisé en ce que** l'alésage centrale (3^{III}) du corps d'insertion (3) est non seulement pourvue d'une nervure axiale (3^{IV}) s'engrenant dans une rainure axiale de la tige centrale (6) mais aussi cpmprend autour de son périmètre une nervure axiale (3^{v}), laquelle est en engrènement avec une rainure axiale (I^{II}) de la paroi de l'intérieur de boîtier (5).

8. Un clapet d'arrêt automatique selon l'une des revendications précédentes, **caractérisé en ce que** le ressort de soupape (8) aboute à la tête de soupape (9).

9. Un clapet d'arrêt automatique selon l'une des revendications précédentes, **caractérisé en ce qu'**un circlips (10) dans un épaulement de l'intérieur de boîtier (5) retient le corps d'insertion (3).

10. Un clapet d'arrêt automatique selon la revendication 9, **caractérisé en ce que** le corps d'insertion (3) est disposé dans l'épaulement de l'intérieur de boîtier (1') avec un jeu axial (A) par rapport au circlips (10).
